**Europäisches Patentamt**

**European Patent Office**

**Office européen des brevets**

(19)

(11) Veröffentlichungsnummer: **0 033 549**
**A2**

(12) ## EUROPÄISCHE PATENTANMELDUNG

(21) Anmeldenummer: **81100827.5**

(22) Anmeldetag: **05.02.81**

(51) Int. Cl.³: **A 23 F 5/28**
**A 23 L 2/08**

(30) Priorität: **05.02.80 DE 3004162**

(43) Veröffentlichungstag der Anmeldung:
**12.08.81 Patentblatt 81/32**

(84) Benannte Vertragsstaaten:
**AT BE CH FR GB LI NL**

(71) Anmelder: **HAG Aktiengesellschaft**
**Hagstrasse**
**D-2800 Bremen 1(DE)**

(72) Erfinder: **Schrein, Jürgen, Dipl.-Ing.**
**Malmöstrasse 35**
**D-2800 Bremen 77(DE)**

(74) Vertreter: **Abitz, Walter, Dr.-Ing. et al,**
**Abitz, Morf, Gritschneder P.O. Box 86 01 09**
**D-8000 München 86(DE)**

(54) **Verfahren zum Trocknen von flüssigen oder pastösen Produkten, welche flüchtige oder temperaturempfindliche Aromastoffe enthalten.**

(57) Verfahren zum Trocknen von flüssigen oder pastösen Produkten, welche flüchtige oder temperaturempfindliche Aromastoffe enthalten, durch Aufbringen einer dünnen Produktschicht auf ein Trägermaterial, wobei das Produkt eine solche Dichte und/oder Viskosität hat, dass sich die Produktschicht während der Trocknung nicht relativ zum Trägermaterial bewegt. Dadurch bleiben die Aromastoffe weitgehend vollständig und unverändert im getrockneten Produkt erhalten.

EP 0 033 549 A2

241079

Die Erfindung betrifft ein Verfahren zum Trocknen von flüssigen oder pastösen Produkten, welche flüchtige oder temperaturempfindliche Aromastoffe enthalten.

Zur Zeit werden zur Trocknung aromahaltiger Flüssigkeiten vor allem die Sprühtrocknung und die Gefriertrocknung angewendet. Unter flüchtigen Aromastoffen seien hier die leicht- und schwerflüchtigen Substanzen zusammengefasst, welche während eines technischen Prozesses Veränderungen erleiden oder verlorengehen können.

Bei der Sprühtrocknung geht ein grosser Teil der Aromastoffe dadurch verloren, dass das sehr schnell verdunstende Lösungsmittel wie ein Schleppmittel auf die Aromastoffe wirkt. Ein weiterer Nachteil der Sprühtrocknung ist ungleichmässige Korngrössenverteilung und die ungünstige Verweilzeitverteilung. Dadurch werden die kleinen, am schnellsten trocknenden Teilchen am längsten einer hohen, aromaschädigenden Temperatur ausgesetzt.

Die Gefriertrocknung vermeidet zwar die Nachteile der Sprühtrocknung. Diese Trocknungstechnik hat jedoch zwei andere schwerwiegende Nachteile:

1. Die vom Verfahren her bedingte, riesige innere Oberfläche des trocknenden Produktes gestattet einem grossen Teil der Aromastoffe, in den Raum niedrigen Drucks zu entweichen.

2. Das Gefriertrocknungsverfahren ist sehr teuer.

Aufgabe der Erfindung ist es, Aromastoffe enthaltende, flüssige oder pastöse Produkte so zu trocknen, dass die Aromastoffe möglichst vollständig und unverändert im Produkt erhalten bleiben.

241079

Diese Aufgabe wird durch die im kennzeichnenden Teil des Anspruchs 1 angegebenen Massnahmen gelöst.

Überraschenderweise wird durch die erfindungsgemäss verwendeten Massnahmen zu Beginn der Trocknung eine Haut auf der Oberfläche der Produktschicht gebildet, die verhindert, dass die Aromastoffe entweichen.

Die Hautbildung zu Beginn des Trocknungsprozesses wird vorzugsweise dadurch erreicht, dass ein Produkt mit einer höheren Feststoffkonzentration von 10 - 80, vorzugsweise 30 - 70 und insbesondere 40 - 60 Gew.-%, und/oder mit einem Gehalt an viskositätserhöhenden Mitteln und/oder mit einer Schaumstruktur eingesetzt wird.

Falls die geeignete Feststoffkonzentration und/oder Viskosität im zu trocknenden Produkt nicht vorliegt, kann sie durch Zusatz von in der Lebensmitteltechnologie üblichen Trocknungshilfsmitteln oder Verdickungsmitteln erreicht werden. Hierzu sind verwendbar bestimmte Kohlehydrate, wie Maltodextrin oder Saccharose, Pflanzengummi, wie Gummi arabicum, oder Alginate. Die geeignete Feststoffkonzentration kann auch durch Vakuumkonzentrierung eines Vorproduktes oder durch Zusatz von trockenem Produkt eingestellt werden.

Die Schichtdicke variiert vorzugsweise von 0,1 mm bei dünnflüssigen Produkten bis zu 10 mm bei verschäumten, hochviskosen Produkten. Wegen des Einflusses der Schichtdicke auf die Trocknungszeit ist eine Dicke von unter 3 mm zu bevorzugen.

Die aufgebrachte Schicht des Produkts wird bei mittleren Trocknungszeiten von vorzugsweise 6 - 60 Min. bei produktunschädlichen Produkt-Temperaturen, z.B. von 30 - 100 °C, vorzugsweise 40 - 60 °C, getrocknet, wodurch eine Aromaveränderung praktisch vermieden wird.

241079

Da die Haut die Trocknungsgeschwindigkeit stark herabsetzt, ist es nötig, einen Trocknungsapparat zu benutzen, welcher die Ausbildung von möglichst grossen Trocknungsoberflächen, bezogen auf den Rauminhalt des Apparates, gestattet, damit die Trocknung wirtschaftlich durchgeführt werden kann. Besonders geeignet sind Apparate, bei denen das flüssige Produkt in einer dünnen Schicht auf einen festen Trägerstoff aufgebracht und nach der Trocknung von diesem wieder getrennt werden kann. Geeignete Apparate im Sinne des Verfahrens sind Konvektionstrockner, wie Bandtrockner, Wirbelschichttrockner mit einem Bett aus inerten Partikeln oder Kugelbett-Trockner. Die beiden letztgenannten sind besonders wirtschaftlich. Es sind jedoch auch andere Apparate anwendbar. Wichtig ist lediglich, dass eine geschlossene Schicht des Produktes aufgebracht werden kann, welche sich während des Trocknungsvorganges in Ruhe relativ zum Trägermaterial befindet. Die Form des Trägermaterials, die Konzentration des flüssigen Produktes und die Schichtdicke können in weiten Grenzen variiert werden, um die Eigenschaften des Fertigproduktes den Erfordernissen anzupassen. Da die Trocknung bei schonenden Bedingungen durchgeführt wird, kann der bei der Trennung von Produkt und Träger anfallende Staub in die Aufgabeflüssigkeit eingemischt und damit in den Prozess zurückgeführt werden.


B e i s p i e l    1

Kaffee-Extrakt mit 40 Gew.-% Feststoffgehalt wird durch Zumischen von trockenem Produkt auf 50 Gew.-% Feststoffgehalt aufkonzentriert, durch Zusetzen von $CO_2$ aufgeschäumt, mit einer Schichtdicke von 2 mm auf Metallstäbe aufgebracht und bei 60 °C im Warmluftstrom getrocknet. Unmittelbar nach Beginn der Trocknung bildet sich eine völlig glatte, geschlossene, hautartige Oberfläche. Nach 40 Min. ist das Produkt auf weniger als 5 % Restwassergehalt getrocknet. Nach Abkühlung kann das Produkt leicht vom Trägermaterial abgeschabt werden. Nach Mahlen und Absieben der Feinteile erhält man ein dunkelbraunes, neutral riechendes Pulver. Die Löslichkeit ist mit sprühgetrocknetem Pulver vergleichbar. 1,8 g des erhaltenen Pulvers, in 150 ml kochendem Wasser aufgelöst, ergeben ein angenehmes Kaffeegetränk, das geschmackliche Vorteile aufweist gegenüber Aufgüssen aus sprüh- oder gefriergetrockneten Pulvers aus demselben Flüssigextrakt.

B e i s p i e l   2

In den Fällen, wo das gewünschte Endprodukt den Einsatz eines Trägermaterials erlaubt, welches nach dem Trocknungsvorgang nicht wieder abgetrennt werden muss, kann auch wie folgt verfahren werden:

In einem stationären Wirbelbett mit eingebautem Rührwerk werden 2 kg fein gemahlener Zucker mit Warmluft von 80 °C fluidisiert. Mit einer Pumpe wird ein Fruchtsaftkonzentrat mit einem Feststoffgehalt von 60 Gew.-% in einer Menge von 80 g/Min. in das Wirbelbett eingetropft. Der Rührer verteilt die Flüssigkeit in dünner Schicht auf der Oberfläche der Zuckerpartikel. Nach 18 Min. besteht das Wirbelbettmaterial aus feinem Granulat, das zu 70 Gew.-% aus Trägerstoff (Zucker) und 30 Gew.-% aus getrockneten Fruchtsaftbestandteilen besteht. Die Körner haben eine glatte, dichte Oberfläche aus Fruchtsaftbestandteilen, welche wegen der geringen Durchlässigkeit für Aromastoffe ein qualitativ hochwertiges Produkt und eine gute Lagerfähigkeit gewährleisten. Nachtrocknung bis auf einen Restwassergehalt von 4 % und Kühlung auf Zimmertemperatur schliessen den Prozess

241079                         -6-

ab. Das Produkt bietet Vorteile in Geruch und Geschmack
gegenüber sprühgetrockneten Produkten gleicher Zusammensetzung.


Ende der Beschreibung

# Patentansprüche

1. Verfahren zum Trocknen von flüssigen oder pastösen Produkten, welche flüchtige oder temperaturempfindliche Aromastoffe enthalten, dadurch gekennzeichnet, dass man eine dünne Schicht des zu trocknenden Produkts auf ein Trägermaterial aufbringt und die Produktschicht trocknet, wobei man zwecks Hautbildung zu Beginn der Trocknung ein Produkt einer solchen Dichte und/oder Viskosität einsetzt, dass die Schicht sich nicht während des Trocknungsvorganges relativ zum Trägermaterial bewegt.

2. Verfahren nach Anspruch 1, dadurch gekennzeichnet, dass man ein Produkt mit einer Feststoffkonzentration von 10 - 80 Gew.-%, vorzugsweise von 30 - 70 Gew.-%, einsetzt.

3. Verfahren nach Anspruch 1 oder 2, dadurch gekennzeichnet, dass man ein Produkt einsetzt, das ein viskositätserhöhendes Mittel enthält.

4. Verfahren nach einem oder mehreren der Ansprüche 1 bis 3, dadurch gekennzeichnet, dass man ein verschäumtes Produkt einsetzt.

241079

5. Verfahren nach Anspruch 4, dadurch gekennzeichnet, dass man ein Produkt einsetzt, das durch Zumischen eines Inertgases, insbesondere Kohlendioxid, Stickstoff oder Distickstoffmonoxid, verschäumt worden ist.

-------